# EUROPEAN PATENT APPLICATION

(11) **EP 2 801 526 A1**
(43) Date of publication of application: **12.11.2014**
(21) Application number: 14167144.6
(22) Date of filing: 06.05.2014
(51) Int. Cl.: B64D 11/04, F25B 47/02

(54) **Galley cooling heat exchanger defrost mechanism**

(30) Priority: 06.05.2013 US 201313887735
(71) Applicant: Hamilton Sundstrand Corporation, Windsor Locks, CT 06096-1010 (US)
(72) Inventor: Zywiak, Thomas M., Suffield, CT Connecticut 06078 (US); Anderson, Jr., David, Enfield, CT Connecticut 06082 (US)
(74) Representative: Leckey, David Herbert

(57) **Abstract**

A galley chiller system (30) configured to operate in a defrost mode is provided including a cooling module (50), a heating element (60), and a fan module (40). The cooling module (50) is configured to provide cool air to at least one galley monument (24). The cooling module (50) includes a heat exchanger (54) configured to have both air and a liquid coolant flow there through in a heat transfer relationship. The heating element (60) is arranged generally adjacent a coolant inlet (56) of the heat exchanger (54). The fan module (40) is configured to circulate warm return air from the at least galley monument (24) to the cooling module (50). When the galley chiller system (30) is in the defrost mode, only liquid coolant flows through the heat exchanger (24). The liquid coolant is locally heated by the heating element (60).

## Description

### BACKGROUND OF THE INVENTION

Exemplary embodiments of this invention generally relates to aircraft and, more particularly, a galley chiller system for use in an aircraft.

A typical commercial aircraft has several cooling systems, including a galley chiller system dedicated to refrigerating the food carts in the galleys to prevent food spoilage prior to use by the cabin attendants. These food carts have in the past been interfaced with cold air supply systems in the galley designed to cool the interiors of the food carts. Such cool air distribution systems were generally co-located with the balance of the galley and interfaced to the food carts by means of gaskets connecting the food carts to a plenum containing the cool air.

Aircraft galley chiller systems include a cooling module configured to cool the air below freezing that is then supplied to the food carts in the galley. A conventional cooling module includes a heat exchanger having a single, multi-pass core. As a result of moisture present in the airflow provided to the heat exchanger for cooling, water from the airflow may condense in the first few passes of the heat exchanger. This water may then freeze on the heat exchanger fins as it drains into the cooler section of the core. These ice formations may block the flow of air through the heat exchanger, thereby reducing the efficiency and functionality of the cooling module and the galley chiller system.

In some galley chiller systems, the heat exchanger is defrosted by temporarily eliminating the flow of refrigerant through the heat exchanger. The heat generated by the fan circulating air through the system raises the temperature of the air within the system to above 32°F (0°C), thereby melting an ice on the surface of the heat exchanger. However, the increase in air temperature also causes the temperature of the food carts to increase such that the carts must again be cooled.

### BRIEF DESCRIPTION OF THE INVENTION

According to one embodiment of the invention, a galley chiller system configured to operate in a defrost mode is provided. The chiller system of this embodiment includes a cooling module, a heating element, and a fan module. The cooling module is configured to provide cool air to at least one galley monument. The cooling module includes a heat exchanger configured to have both air and a liquid coolant flow there through in a heat transfer relationship. The heating element is arranged generally adjacent a coolant inlet of the heat exchanger. The fan module is configured to circulate warm return air from the galley monument to the cooling module. When the galley chiller system is in the defrost mode, only liquid coolant flows through the heat exchanger. The liquid coolant is locally heated by the heating element.

According to yet another embodiment of the invention, a method of defrosting a heat exchanger in a cooling module of a galley chiller system is provided. The method includes: detecting an environmental condition adjacent the heat exchanger; determining that the environmental condition is below a predetermined threshold; removing power from a fan module configured to circulate air through the heat exchanger; and locally heating a liquid coolant before it enters a coolant inlet of the heat exchanger.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross-sectional schematic diagram of a commercial aircraft; and
FIG. 2 is a schematic diagram of a galley chiller system of an aircraft according to an embodiment of the invention.

The detailed description explains embodiments of the invention, together with advantages and features, by way of example with reference to the drawings.

### DETAILED DESCRIPTION OF THE INVENTION

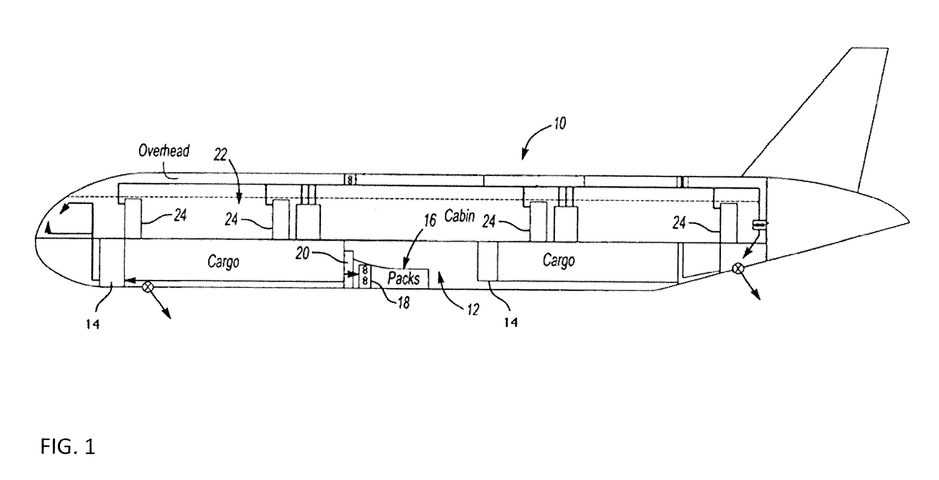

A high level schematic cross-sectional view of a commercial aircraft 10 is illustrated in FIG. 1. The aircraft 10 includes a cargo area 12 within the lower portion of the aircraft 10. The cargo area 12 may include one or more power electronics power bays 14 housing various electronic components used in the control and operation of the aircraft 10. An aircraft cooling system 16 includes one or more air conditioning packs typically located within the cargo area 12. The aircraft cooling system 16 provides temperature conditioned air to a cabin area 22 to provide a comfortable climate for the passengers within the cabin area 22. A power electronics cooling system 20 may also be located within the cargo area 12 to cool the power electronics equipment bay 14.

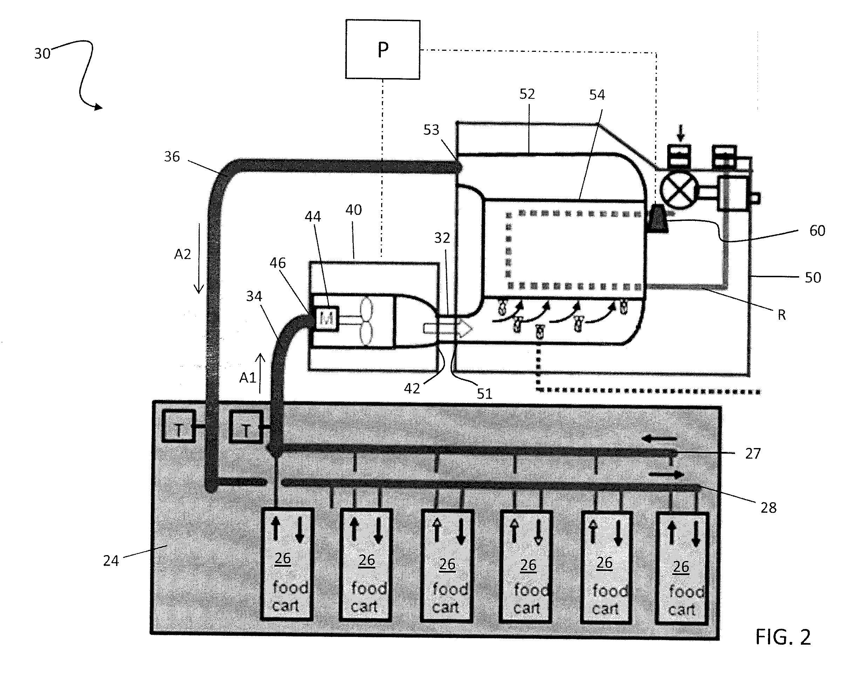

Galley monuments 24 are positioned in various convenient locations throughout the cabin area 22. Each of the galley monuments 24 commonly houses a plurality of removable galley carts 26 (see FIG. 2) containing food and other perishable goods. The galley monuments 24 are fluidly coupled to a common air source such that cool air may be cycled through each of the removable galley carts 26.

Referring now to FIG. 2, a schematic diagram of a galley chiller system 30 configured to cool the plurality of removable carts 26 in each galley monuments 24 of an aircraft 10 is illustrated. Although a particular configuration of a galley chiller system 30 having a single galley monument 24 is illustrated and described in the disclosed non-limiting embodiment, other configurations having any number of galley monuments 24 are within the scope of the invention.

The galley chiller system 30 includes a fan module 40 operably coupled to a cooling module 50. In one embodiment, an outlet 42 of the fan module 40 is fluidly connected to an inlet 51 of the cooling module 50 by a first duct or conduit 32. The fan module 40 is configured to circulate air through the galley chiller system 30, and more particularly, through an internal chamber 52 of the cooling module 50. Located within the internal chamber 52 of the cooling module 50 is a heat exchanger 54 through which a liquid coolant R, flows. A heating element 60 is positioned generally upstream from the coolant inlet 56 of the heat exchanger 54 such that liquid coolant R flows past the heating element 60 before entering into the heat exchanger 54. Both the heating element 60 and a fan motor 44 of the fan module 40 are operably coupled to a power supply. The heating element 60 and the fan motor 44 may, but need not be, coupled to the same power supply P, as illustrated in the FIG.

A galley header or conduit 34 fluidly couples an outlet manifold 27 connected to each of the plurality of carts 26 within a galley monument 24 to an inlet 46 of the fan module 40. Similarly, another galley header or conduit 36 extends between the outlet 53 of the cooling module 50 and an inlet manifold 28 connected to the plurality of carts 26 within the galley monument 24 such that the galley chiller system 30 is a closed loop system.

The galley chiller system 30 is configured to operate in multiple modes including a normal mode and a defrost mode. When the system operates in a normal mode, power is supplied to the fan motor 44 of the fan module 40 to circulate air through the galley chiller system 30, thereby cooling the plurality of carts 26. In the normal mode, power is generally not supplied to the heating element 60. Warm air A1 flows from the outlet manifold 27, through galley header 34, to the inlet 46 of the fan module 40. The operating fan module 40 blows the warm air through the heat exchanger 54 in the cooling module. Within the heat exchanger 54, the warm air A1 is arranged in a heat transfer relationship with the cool liquid coolant such that the liquid coolant R absorbs heat, thereby cooling the air. The cool air A2 provided at the outlet 53 of the cooling module 50 is supplied to the inlet manifold 28 connected to the plurality of carts 26 within the galley monument 24. The cool air A2 circulates through each of the carts 26 to cool any perishable goods stored therein. As the air passes through the carts 26, heat from the carts 26 transfers to the air. The warm air A1 returned from the carts 26 flows from the outlet manifold 27 back to the inlet 46 of the fan module 40 to complete the cycle.

During operation in a defrost mode, power is supplied to the heating element 60 and generally not to the fan motor 44 of the fan module 40. As a result, air does not circulate through the galley chiller system 30 during defrost mode. However, the liquid coolant R continues to circulate through the heat exchanger 54. The active heating element increases the temperature of the liquid coolant R before entering the inlet of the heat exchanger 54. In one embodiment, the heating element increases the temperature of the liquid coolant R to a temperature above freezing or 32°F (0°C). As the liquid coolant R circulates through the heat exchanger 54, the heat from the liquid coolant R melts any ice that has gathered on the surface of the heat exchanger 54 and may be blocking a flow path of the warm air configured to pass there through. In one embodiment, the galley chiller system 30 may transform from a normal mode to a defrost mode, based on a measured environmental condition adjacent the heat exchanger 54 as detected by one or more sensors (not shown). For example, if the measured flow rate of the air through the heat exchanger is below a predetermined threshold, the system 30 may transform to a defrost mode to reduce the ice formations blocking the flow of air A1 through the heat exchanger 54. Alternatively, the system may transform to a defrost mode if the galley air exit temperature A1 or an air side pressure sensor (not shown) exceeds a predetermined threshold. The system may be configured to transform from defrost mode back to a normal operational mode after a timer runs out, or based on another similar environmental condition.

By circulating a heated liquid coolant R through the heat exchanger, the moisture from the air A1 condensed on the surface of the heat exchanger is more easily removed, thereby preventing the formation of flow blockages within the heat exchanger 54. In addition, by locally heating the liquid coolant R as it enters the heat exchanger 54 of the cooling module 50, the energy and time required to operate the system 30 in a defrost mode is reduced, thus making the galley chiller system 30 and the aircraft 10 more efficient.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A galley chiller system (30) configured to operate in a defrost mode, comprising:
a cooling module (50) configured to provide cool air to at least one galley monument (24), the cooling module (50) including a heat exchanger (54) configured to have both air and a liquid coolant flowing there through;
a heating element (60) arranged generally adjacent a coolant inlet (56) of the heat exchanger (54);
a fan module (40) configured to circulate warm return air from the at least one galley monument (24) to the cooling module (50);
wherein when the galley chiller system (30) is in the defrost mode, only liquid coolant flows through the heat exchanger (54), the liquid coolant being locally heated by the heating element (60).

2. The galley chiller system according to claim 1, wherein the heating element (60) locally heats the liquid coolant only when the galley chiller system (30) is in a defrost mode.

3. The galley chiller system according to claim 1 or 2, wherein the heating element (60) is positioned generally upstream from the coolant inlet (56) of the heat exchanger (54).

4. The galley chiller system according to any preceding claim, wherein when the galley chiller system (30) is in the defrost mode, the fan module (40) is non-operational.

5. The galley chiller system according to any preceding claim, wherein the heating element (60) is connected to a first power supply and the fan module (40) is connected to a second power supply.

6. The galley chiller system according to claim 5, wherein the first power supply is distinct from the second power supply.

7. The galley chiller system according any preceding to claim, further comprising:
a first galley header (84) fluidly coupling the at least one galley monument (24) to an inlet (46) of the fan module (40); and
a second galley header (36) fluidly coupling an outlet of the cooling module (50) to the at least one galley monument (24).

8. The galley chiller system according to claim 7, wherein a plurality of galley monuments (24) are fluidly connected to the fan module (40) and the cooling module (50).

9. The galley chiller system according to any preceding claim, wherein the at least one galley monument (24) includes a plurality of removable storage carts (26) configured to store perishable items therein.

10. A method of defrosting a heat exchanger (54) in a cooling module (50) of a galley chiller system (30), comprising:
detecting an environmental condition adjacent the heat exchanger (54);
determining the environmental condition to be below a predetermined threshold;
removing power from a fan module (40) configured to circulate air through the heat exchanger (24); and
locally heating a liquid coolant before the liquid coolant enters a coolant inlet (56) of the heat exchanger (54).

11. The method according to claim 10, wherein the environmental condition is detected using at least one sensor.

12. The method according to claim 10 or 11, wherein the environmental condition is an air flow rate through the heat exchanger (54).

13. The method according to claim 10 or 11, wherein the environmental condition is an air exit galley temperature.

14. The method according to any of claims 10 to 13, wherein the heating element (60) is positioned generally upstream from the coolant inlet (56) of the heat exchanger (54).

15. The method according to any of claims 10 to 14, wherein the heating element (60) is configured to heat the liquid coolant to a temperature greater than or equal to about 32°F (0°C).
